# EUROPÄISCHE PATENTSCHRIFT

(11) **EP 4 086 059 B1**
(45) Veröffentlichungstag und Bekanntmachung des Hinweises auf die Patenterteilung: **27.08.2025**
(21) Anmeldenummer: 21172663.3
(22) Anmeldetag: 07.05.2021
(51) Int. Cl.: B29C 33/02, B29C 43/52, B29C 43/36, B29C 45/73, B29C 33/56, B29C 45/37, B29C 33/30, B29C 45/16, B29L 31/00

(54) **WERKZEUGEINSATZ FÜR EIN URFORMWERKZEUG SOWIE DAMIT AUSGERÜSTETES URFORMWERKZEUG**
TOOL INSERT FOR A MASTER MOULD AND MASTER MOULD PROVIDED THEREWITH
INSERT D'OUTIL POUR UN OUTIL DE MOULAGE, AINSI QU'OUTIL DE MOULAGE ÉQUIPÉ D'UN TEL INSERT D'OUTIL

(43) Veröffentlichungstag der Anmeldung: 09.11.2022
(73) Patentinhaber: Heraeus Amloy Technologies GmbH, 63450 Hanau (DE); Kunststoff-Institut für die mittelständische Wirtschaft NRW GmbH (KIMW NRW GmbH), 58507 Lüdenscheid (DE)
(72) Erfinder: WACHTER, Hans-Jürgen, 63791 Karlstein (DE); MELDE, Valeska, 63791 Karlstein (DE); HINZPETER, Udo, 58507 Lüdenscheid (DE)
(74) Vertreter: Heraeus IP

(56) Entgegenhaltungen:
- EP-A2- 2 119 549
- WO-A1-2020/050851
- JP-B2- 4 110 506
- US-A- 5 324 473

## Beschreibung

Gegenstand der Erfindung ist ein Werkzeugeinsatz für ein Urformwerkzeug, aufweisend einen thermischen Isolator angeordnet auf einem Grundkörper, mit einer von dem geschmolzenen, in Form zu bringenden Werkstoff kontaktierten Abformoberfläche, die zumindest bereichsweise durch einen thermischen Isolator von dem Grundkörper des Werkzeugeinsatzes beabstandet ist.

Beim Spritzgießen von Formteilen aus thermoplastischen, duroplastischen oder elastomeren Werkstoffen wird der zuvor plastifizierte Werkstoff in die Kavität eines Urformwerkzeuges eingebracht. Die Kavität des Urformwerkzeuges ist durch mehrere Formwerkzeuge (Werkzeugeinsätze) gebildet, die zum Entformen des in der Kavität abgekühlten Werkstückes voneinander getrennt werden können. Die in Kontakt mit der Formmasse tretenden Oberflächen der Formwerkzeuge werden im Rahmen dieser Ausführungen als Abformoberflächen angesprochen. Das Abbild der Abformoberflächen definiert die Oberfläche des Werkstückes. Die Abformgenauigkeit an der Oberfläche des Werkstückes kann durch Fehler beeinträchtigt werden, beispielsweise durch Bindenahtkerben, Glanzunterschiede oder Wolken- und Schlierenbildung. Derartige Oberflächenfehler können durch ungleichmäßige Kontaktflächentemperaturen der Formwerkzeuge entstehen. Entsprechendes lässt sich auch beim Druckgießen von Metallen beobachten.

Um die Abformgenauigkeit für die in die Kavität einer Form eingebrachte Kunststoffschmelze zu verbessern, ist bekannt, die Werkzeugwandtemperatur - also die Temperatur der Abformoberflächen der Formwerkzeuge - zu erhöhen, wodurch die Fließfähigkeit der in die Kavität eingebrachten Kunststoffschmelze verbessert wird.

Zum Temperieren derartiger Formwerkzeuge bzw. Werkzeugeinsätze verfügen diese über Temperiermittelkanäle, durch die zum Halten des Formwerkzeuges auf einer bestimmten Temperatur, zum Erwärmen oder zum Kühlen desselben auf eine bestimmte Temperatur entsprechend temperierte Fluide, beispielsweise Wasser oder Öl hindurchgeleitet wird. Wenn derartige Formwerkzeuge in bestimmten Bereichen eine von der Grundtemperatur abweichende, höhere Temperatur aufweisen sollen, werden z.B. zusätzlich elektrische Heizpatronen oder im Falle einer lokalen Temperaturerniedrigung elektrische Kühlelemente in Ausnehmungen des Formwerkzeuges angeordnet. Ebenfalls sind Formwerkzeuge bekannt, bei denen die Kühlelemente für ein definiertes Abkühlen der Kunststoffschmelze sorgen und damit den Abkühlprozess, mithin die Zykluszeit verkürzen. So wird in DE 197 35 031 A1 eine Spritzgießvorrichtung beschrieben, bei der in der Nähe kritischer Stellen Temperaturelemente, z.B. elektrische Heizpatronen und auch Kühlelemente, in Ausnehmungen des Formeinsatzes eingebracht werden, die den Formeinsatz während der Einspritzphase des Kunststoffes beheizen und nach dem Befüllen des Formhohlraumes sorgen die Kühlelemente für ein definiertes Abkühlen der Kunststoffschmelze.

Grundprinzip der vorstehend aufgeführten Konzepte ist jeweils eine Erhöhung der Werkzeugwandtemperatur durch die Zufuhr von zusätzlicher Wärmeenergie. Hieraus resultieren zusätzliche Energiekosten, sowie Investitionskosten für die benötigte Peripherie, wie Heizelemente und Steuergeräte.

Aus DE 36 21 379 A1 ist ein Verfahren und eine Vorrichtung zur Beseitigung von Fließ- bzw. Bindenahteinkerbungen in Spritzgießteilen aus Thermoplast bekannt, indem beim Spritzgießen die Kunststoffschmelze während der Formbefüllung in den Formwandbereichen der vorausbestimmbaren Fließ- und Bindenähte so lange nahe der Erweichungs- bzw. der Kristallitschmelztemperatur gehalten wird, bis die Formfüllung abgeschlossen ist.

Aus DE 20 2006 004632 U1 ist ein gattungsgemäßes Kunststoffurformwerkzeug bekannt. Bei diesem vorbekannten Kunststoffurformwerkzeug wird zumindest ein Teil der Oberfläche der Kavität durch einen keramischen Werkzeugeinsatz gebildet. Aufgrund der schlechten Wärmeleitfähigkeit eines solchen keramischen Einsatzes, verglichen mit der Wärmeleitfähigkeit des Grundkörpers des Werkzeugeinsatzes, der typischerweise aus einem Werkzeugstahl hergestellt ist, kühlt sich die Kunststoffschmelze an der Oberfläche des keramischen Einsatzes langsamer ab. Mithin verzögert sich ein Abkühlen der Kunststoffschmelze, wodurch bestimmte optische Eigenschaften auf der Oberfläche des zu formenden Kunststoffgegenstandes verbessert werden können, beispielsweise in den Bereichen, in denen ansonsten Fließ- oder Bindenähte entstehen.

Mit Kontaktoberflächen aus keramischem Material lassen sich zwar eine Vielzahl von Oberflächentexturen ausbilden, jedoch sind die Anforderungen an die Oberflächenbeschaffenheit begrenzt. Im Bereich von mehrfach gekrümmten Konturen ist die Erstellung von Hochglanzoberflächen auf keramischen im Gegensatz zu metallischen Materialien nur mit hohem technischem und einem damit verbundenen höheren finanziellem Einsatz realisierbar. Auch Strukturierungen, wie etwa Narbungen sind bei keramischen Materialien nur eingeschränkt herstellbar.

Aus DE 10 2014 223 161 A1 ist eine Werkzeugoberfläche mit einer glasartigen, insbesondere Silikat-basierten, Beschichtung bekannt. Bei dieser Schicht handelt es sich um eine Emaille- oder Keramikschicht. Die Schichtdicke beträgt zwischen 10 und 500 µm, wobei die spezifische Wärmeleitfähigkeit der glasartigen Schicht vorzugsweise < 5 W/mK ist. Die Ausbildung von Oberflächenstrukturierungen ist bei derartigen Schichten nicht oder wenn überhaupt nur mit einem hohen technischen Aufwand realisierbar.

Zur Vermeidung der sich aus DE 20 2006 004 632 U1 ergebenden Nachteile ist in DE 20 2012 100 504 U1 vorgeschlagen worden, dass die durch den Isolator von dem Werkzeugblock beabstandete Kontaktoberfläche durch die zur Kavität des Werkzeuges weisende Seite einer Temperierschicht bereitgestellt ist. Der Isolator befindet sich damit unterhalb der Temperierschicht. Die Temperierschicht weist eine Wärmeleitfähigkeit auf, die einem Vielfachen der Wärmeleitfähigkeit des Isolators entspricht. Die Temperierschicht ist eine metallische Schicht, aufgebracht beispielsweise im Wege eines elektrolytischen Abscheideprozesses. Somit wird bei diesem vorbekannten Kunststoffurformwerkzeug die durch einen Isolator aus keramischem oder polymerem Werkstoff bereitgestellte, in die Kavität eines Urformwerkzeuges weisende Oberfläche durch die Temperierschicht verblendet. Auf diese Weise hat die in Form zu bringende, in die Kavität eingespritzte Kunststoffmasse über die gesamte Abformfläche des Werkzeugeinsatzes Metallkontakt, wodurch Oberflächenunterschiede an dem hergestellten Kunststoffprodukt durch Abformflächen aus unterschiedlichem Material und damit unterschiedlichen Abformqualitäten vermieden sind.

Ein Werkzeugeinsatz für ein Urformwerkzeug nach dem Oberbegriff des Anspruchs 1 ist aus der WO 2020/050851 A1 bekannt.

Ausgehend von diesem diskutierten Stand der Technik liegt der Erfindung die Aufgabe zugrunde, den Aufbau eines abformflächenseitig zumindest bereichsweise einen Isolator aufweisenden Werkzeugeinsatzes für ein Urformwerkzeug, beispielsweise ein Kunststoffurformwerkzeug, dergestalt auszulegen, dass dieses nicht nur den Anforderungen an eine verzögerte Abkühlung im Bereich des Isolators genügt, sondern durch diesen zudem der Werkzeugeinsatzaufbau vereinfacht und dennoch eine besonders hohe Qualität der Abformung bereitgestellt wird. Ferner sollen die Freiheiten in der Auslegung der Oberflächengestaltung der Abformfläche trotz Vorsehens von zumindest bereichsweise abformoberflächenseitig vorhandenen Isolatoren so wenig wie möglich eingeschränkt sein.

Gelöst wird diese Aufgabe durch einen Werkzeugeinsatz der eingangs genannten Art, bei dem der thermische Isolator ein metallisches Massivglas aufweist.

Realisiert sein kann der thermische Isolator dadurch, dass dieser insgesamt aus metallischem Massivglas besteht oder als Verbundisolator unter Beteiligung eines solchen Materials hergestellt ist. Bei diesem Konzept ist es möglich, dass der Isolator, insbesondere wenn insgesamt aus metallischem Massivglas hergestellt, nicht nur den eigentlichen Isolator, sondern auch das Material des Grundkörpers des Werkzeugeinsatzes bildet. In einer anderen möglichen Ausgestaltung ist vorgesehen, dass der Isolator mit einem aus einem anderen Material hergestellten Grundkörper, beispielsweise hergestellt aus Werkzeugstahl, verbunden ist. Bei dieser Ausführungsform ist die Wärmeleitfähigkeit des metallischen Massivglases vorzugsweise geringer ist als die Wärmeleitfähigkeit des Grundkörpers des Werkzeugeinsatzes.

Das metallische Massivglas ist in ihrer Zusammensetzung erfindungsgemäß nicht weiter beschränkt. Bevorzugt ist unter einem metallischen Massivglas eine Legierung mit einer kritischen Gussdicke von mindestens einem Millimeter zu verstehen. Das bedeutet, dass eine solche Legierung bis zur kritischen Gussdicke amorph erstarren kann.

Metallische Massivgläser gelten als "massiv" (engl. Bulk Metallic Glass, BMG), wenn sie eine kritische Dicke von mindestens 1 mm erreichen. Dies korreliert mit einer Kristallisationsnase bei ~4 × 10⁻³ s im Zeit-Temperatur-Umwandlungsdiagramm (ZTU-Diagramm, engl. TTT-Diagram). Dies ist beispielsweise dargestellt in https://analyticalscience.wiley.com/do/10.1002/qitfach.16890/full/ insbesondere in Verbindung mit Abschnitt 3.2.1 in BULKMETALLICGLASSE, SC. Suryanarayana A. Inoue, CRC Press Taylor & Francis, 2011.

Unter metallischen Massivgläsern sind solche Legierungen zu verstehen, die im festen Zustand metallischen Bindungscharakter und gleichzeitig eine amorphe, also nicht-kristalline Phase aufweisen. Die Legierung kann auf unterschiedlichen Elementen basieren. "Basiert" meint in diesem Zusammenhang, dass das jeweils genannte Element, auf das Gewicht der Legierung bezogen, den größten Anteil darstellt. Bestandteile, die bevorzugt die Basis einer solchen Legierung stellen, können beispielsweise ausgewählt sein aus:
A. Metallen aus Gruppe IA und IIA des Periodensystems, z.B. Magnesium, Calcium,
B. Metallen aus Gruppe IIIA und IVA, z.B. Aluminium oder Gallium,
C. frühen Übergangsmetallen aus den Gruppen IVB bis VIIIB, wie z.B. Titan, Zirkon, Hafnium, Niob, Tantal, Chrom, Molybdän, Mangan,
D. späten Übergangsmetallen aus den Gruppen VIIIB, IB, IIB, wie z.B. Eisen, Kobalt, Nickel, Kupfer, Palladium, Platin, Gold, Silber, Zink,
E. Seltenerdmetallen, wie z.B. Scandium, Yttrium, Terbium, Lanthan, Cer, Neodym. Gadolinium und
F. Nichtmetallen, wie z.B. Bor, Kohlenstoff, Phosphor, Silizium, Germanium, Schwefel.

Die genannten Gruppen beziehen sich auf das Periodensystem der Elemente.

Bevorzugte Kombinationen von Elementen in metallischen Massivgläser sind ausgewählt aus:
- späten Übergangsmetallen und Nichtmetallen, wobei das späte Übergangsmetall die Basis darstellt, beispielsweise Ni-P, Pd-Si, Au-Si-Ge, Pd-Ni-Cu-P, Fe-Cr-Mo-P-C-B,
- frühen und späten Übergangsmetallen, wobei beide Metalle die Basis darstellen können, wie z.B. Zr-Cu, Zr-Ni, Ti-Ni, Zr-Cu-Ni- Al, Zr-Ti-Cu-Ni-Be,
- Metalle aus Gruppe B mit Seltenerdmetallen, wobei das Metall B die Basis darstellt, wie z.B. Al-La, Al-Ce, Al-La-Ni-Co, La-(Al/Ga)-Cu-Ni, und
- Metalle aus Gruppe A mit späten Übergangsmetallen, wobei das Metall A die Basis darstellt, wie z.B. Mg-Cu, Ca-Mg-Zn, Ca-Mg-Cu

Weitere, besonders bevorzugte Beispiele für Legierungen, die metallische Massivgläser bilden, sind ausgewählt aus der Gruppe bestehend aus Ni-Nb-Sn, Co-Fe-Ta-B, Ca-Mg-Ag-Cu, C-oFe-B-Si-Nb, Fe-Ga-(Cr,Mo)(P,C,B), Ti-Ni-Cu-Sn, Fe-Co-Ln-B, Co-(Al,Ga)-(P,B,Si), Fe-B-Si-Nb und Ni-(Nb,Ta)-Zr-Ti. Insbesondere kann das metallische Massivglas eine Zr-Cu-Al-Nb-Legierung sein. Bevorzugt weist diese Zr-Cu-Al-Nb-Legierung außer Zirkon zusätzlich 23,5 - 24,5% Gew. % Kupfer, 3,5 - 4,0 Gew. % Aluminium sowie 1,5 - 2,0 Gew. % Niob auf, wobei sich die Gewichtsanteile zu 100 Gew. % ergänzen. Kommerziell erhältlich ist die letztgenannte Legierung unter dem Namen AMZ4^{®} von der Heraeus Deutschland GmbH. In einer weiteren, besonders bevorzugten Ausführungsform kann die Massivglas-bildenden Legierung die Elemente Zirkon, Titan, Kupfer, Nickel und Aluminium enthalten oder daraus bestehen. Eine weitere, besonders gut geeignete Legierung weist die Zusammensetzung Zr_{52,5}Ti₅Cu_{17,9}Ni_{44,6}Al₁₀ auf, wobei die Indizes mol-% der jeweiligen Elemente in der Legierung angeben.

Bei diesem Werkzeugeinsatz besteht der thermische Isolator aus einem metallischen Massivglas oder er enthält zumindest ein solches. Im letzteren Fall kann es sich beispielsweise um einen Verbundisolator handeln, bei dem die zur Kavität des Urformwerkzeuges weisende Seite durch metallisches Massivglas gebildet ist, während der Verbundpartner aus einem anderen Material, beispielsweise einer Keramik besteht.

Bei einer Ausgestaltung, bei der der thermische Isolator aufweisend ein metallisches Massivglas vom Material her verschieden von demjenigen des Grundkörpers ist, ist gemäß einer Ausgestaltung die Legierung des metallischen Massivglases ausgewählt, damit diese eine Wärmeleitfähigkeit aufweist, die unter derjenigen des Grundkörpers des Werkzeugeinsatzes liegt, typischerweise signifikant unterhalb derjenigen des Grundkörpers. Der Werkzeugeinsatz bzw. dessen Grundkörper eines Kunststoffurformwerkzeuges ist typischerweise aus einem Werkzeugstahl hergestellt. Dieser weist eine Wärmeleitfähigkeit von etwa 30 - 46 W/mK auf. Somit kann über die Auswahl der Legierung zum Herstellen des metallischen Massivglases und damit deren Wärmeleitfähigkeit die Abkühlverzögerung der geschmolzenen, in die Kavität eingebrachten Masse an der Abformfläche des Werkzeugeinsatzes eingerichtet werden. Gemäß einem Ausführungsbeispiel beträgt die Wärmeleitfähigkeit des metallischen Massivglases als Isolator zwischen 5 und 8 W/mK. Die Wärmeleitfähigkeit des metallischen Massivglases ist bevorzugt um einen Faktor 8 - 10 geringer als diejenige des Grundkörpers des Werkzeugeinsatzes. Ein solcher Unterschied in der Wärmeleitfähigkeit wird als geeignet angesehen, um den Isolator aus metallischem Massivglas mit einer nicht zu großen Schichtdicke herstellen zu müssen und dennoch die gewünschte Abkühlverzögerung an der Abformoberfläche zu erzielen. Vorteilhaft an einer Auslegung des Isolators als metallisches Massivglas oder unter Beteiligung eines solchen Materials ist zudem, dass ein solcher Isolator mit einer relativ großen Bandbreite seiner Schichtdicke hergestellt werden kann. Die Isolatorschichtdicke liegt bevorzugt im Bereich von 0,1 cm - 10 cm, insbesondere im Bereich von 0,5 cm - 5 cm. Bei dieser Angabe handelt es sich nicht um die Angabe der Schichtdicke nach der originären Herstellung des metallischen Massivglases, sondern um die Schichtdicke des fertigen Isolators, mithin die Schichtdicke des Isolators als Teil des Werkzeugeinsatzes.

Die primäre, durch den Herstellungsprozess gebildete Schichtdicke kann durch Oberflächenbearbeitung in einem nachfolgenden Schritt herabgesetzt werden. Diese relativ große Bandbreite in der Dicke des metallischen Massivglases kann genutzt werden, um über die Dicke des Isolators Einfluss auf die Abkühlverzögerung der in die Formkavität eingebrachten geschmolzenen Masse an der durch den Isolator des Werkzeugeinsatzes bereitgestellten Abkühloberfläche zur Verbesserung der Oberflächenqualität des an dem Werkzeugeinsatz abgeformten Gegenstandes einzurichten. Die Verwendung von metallischem Massivglas zur Herstellung bzw. zum Aufbau des Isolators erlaubt auch eine Ausbildung desselben mit einer unterschiedlichen Dicke über seine flächige Erstreckung. Über die Ausdehnung der Abformoberfläche können durch eine solche unterschiedlich dicke Auslegung des Isolators mit ein und demselben Isolator bereichsweise unterschiedliche Abkühlverzögerungen erreicht werden.

Ein weiterer besonderer Vorteil eines solchermaßen ausgelegten Isolators in einem Werkzeugeinsatz ist, dass, da aus Metall bestehend, eine Oberflächenqualität an der Abformfläche bereitgestellt werden kann, die derjenigen des übrigen Werkzeugeinsatzes entspricht, sollte nicht die gesamte Abformoberfläche des Werkzeugeinsatzes durch den Isolator bereitgestellt sein. Eine Oberflächenbearbeitung eines solchen aus metallischem Massivglas hergestellten Isolators kann, da ebenfalls Metall, in derselben Weise erfolgen, wie dieses für Abformoberflächen herkömmlicher, aus Werkzeugstahl hergestellter Werkzeugeinsätze bekannt ist. Insbesondere kann eine Oberflächenbearbeitung, beispielsweise das Einbringen einer Strukturierung, das Bereitstellen einer glänzenden oder auch hochglänzenden Oberfläche an der Abformfläche des Isolators, sollte dieser nur einen Teilbereich der Abformfläche des Werkzeugeinsatzes ausmachen, gemeinsam mit der übrigen Abformfläche des Werkzeugeinsatzes vorgenommen werden. Eine solche Bearbeitung kann spanend vorgenommen werden, beispielsweise durch Fräsen, Schleifen oder dergleichen. Selbstverständlich sind auch andere Oberflächenbearbeitungen möglich. Im Falle des Einbringens einer Strukturierung kann es sich auch um eine Mikrostrukturierung handeln. Im Unterschied zu keramischen Isolatoren entspricht bei einer Auslegung des Werkzeugeinsatzes mit einem Isolator unter Beteiligung von metallischem Massivglas, angeordnet auf einem materialunterschiedlichen Grundkörper, beispielsweise Werkzeugstahl der Wärmeausdehnungskoeffizient bei metallischem Massivglas zumindest in etwa demjenigen eines zur Herstellung des Grundkörpers verwendeten Werkzeugstahls, ist diesem jedenfalls sehr viel ähnlicher als der Wärmeausdehnungskoeffizient eines herkömmlichen Keramikisolators. Folglich werden bei der Temperaturwechselbeanspruchung eines solchen Werkzeugeinsatzes im Betrieb des damit ausgerüsteten Urformwerkzeuges einem Auftreten von Spannungen, die die Lebensdauer vor allem des Isolators beeinträchtigen würden, auf ein Minimum reduziert. Metallisches Massivglas zeichnet sich auch durch eine relativ hohe Elastizität aus, was ebenfalls vorteilhaft bei den Beanspruchungen der Abformoberfläche innerhalb der Kavität eines Urformwerkzeuges ist. Dies kann insbesondere im Zusammenhang mit den mitunter recht hohen Einspritzdrücken zum Tragen kommen.

Die Ausbildung des Isolators aus metallischem Massivglas erlaubt bei einer Auslegung des Grundkörpers des Werkzeugeinsatzes ebenfalls aus Metall, eine Verbindung der beiden separat hergestellten Fügepartnern durch Klemmen, Formschluss, Kleben oder dergleichen. Optional kann der separat hergestellte Isolator auch stoffschlüssig mit dem Grundkörper verbunden sein. Hierbei ist jedoch vorzugsweise zu beachten, dass die Kristallisationstemperatur des metallischen Massivglases nicht überschritten wird. Bei einem Fügen mit Wärmeeintrag, wie beispielsweise Schweißen, wird dieses so durchgeführt, dass die amorphe Struktur des metallischen Massivglases so wenig wie möglich beeinträchtigt wird. Möglich ist ein Laserschweißen entlang des Umfanges, wobei der Laserstrahl auf den an den Isolator grenzenden Randbereich des Grundkörpers gerichtet ist, sodass vornehmlich Material des Grundkörpers und nicht des Isolators - des metallischen Massivglases - aufgeschmolzen wird. Die Wärmeeinflusszone ist aufgrund der geringen Wärmeleitfähigkeit des metallischen Massivglases gegenüber derjenigen des Grundkörpers ohnehin deutlich geringer.

Aufgrund der elektrischen Leitfähigkeit eines solchen metallischen Massivglases kann die von dem Isolator bereitgestellte Abformoberfläche auch direkt mit einer elektrolytisch abgeschiedenen Verschleißschutzschicht beschichtet werden. Die Verschleißschutzschicht kann beispielsweise ein Material aufweisen, das ausgewählt ist aus Metallen, Gläsern und Keramiken. Insbesondere kann die Verschleißschutzschicht eine Hartchromschicht sein. Ist dieses vorgesehen und stellt die Abformoberfläche des Isolators nur einen Teilbereich der gesamten Abformfläche des Werkzeugeinsatzes dar, bietet es sich an, die gesamte Abformoberfläche des Werkzeugeinsatzes einheitlich mit einer solchen Verschleißschutzschicht auszurüsten. Es versteht sich, dass Verschleißschutzschichten auch auf andere Weise, beispielsweise durch Sputtern, Plasmabeschichten oder dergleichen ausgebildet werden kann. Verfügt der Werkzeugeinsatz über einen oder mehrere derartiger metallischer Massivglasisolatoren, wird durch eine solche Verschleißschutzschicht der Übergang von der Abformoberfläche eines solchen Isolators zu der benachbarten Abformoberfläche, bereitgestellt durch den Grundkörper des Werkzeugeinsatzes selbst, typischerweise aus Werkzeugstahl hergestellt, oder einen benachbarten Isolator verblendet bzw. ausgeglichen. Die Abformoberfläche, mit der die in Form zu bringende geschmolzene Masse in Kontakt tritt, ist dann homogen.

Ein solcher Isolator kann auf unterschiedliche Weise hergestellt werden. Der Isolator kann als separates Bauteil hergestellt und anschließend als Einsatz in eine entsprechend vorbereitete Aussparung des Grundkörpers des Werkzeugeinsatzes an seiner zur Kavität des Urformwerkzeuges weisenden Seite eingesetzt werden.

Wenn der Isolator als separates Bauteil hergestellt wird, kann der Isolator beispielsweise mittels generativer Herstellverfahren, mittels *Spark Plasma Sintering* oder mittels Spritzguss hergestellt werden.

Der Isolator kann beispielsweise auch ein geformtes bzw. gestanztes Blech sein.

In einer anderen Ausführungsform kann der Isolator direkt auf dem Grundkörper aufgebracht werden. Geeignete Verfahren zum direkten Aufbringen umfassen generative Herstellverfahren, typischerweise 3D-Druck, und thermischen Spritzverfahren, wie z.B. Kaltgasspritzen. Das 3D-Druckverfahren kann beispielsweise *Selective Laser Melting* (SLM) oder *Selective Laser Sintering* (SLS) sein. Ein direktes Aufbringen ist bei Verwendung eines Grundkörpers des Werkzeugeinsatzes mit einer hinreichend großen Wärmeleitfähigkeit auch unmittelbar auf dem Werkzeugeinsatz möglich. Die hinreichend hohe Wärmeleitfähigkeit wird im Zusammenhang mit einer solchen generativen Fertigung für das rasche Abkühlen (Abschrecken) des aufgeschmolzenen Legierungspulvers benötigt. Bei einem solchen generativen Herstellungsprozess zum Erstellen des Isolators kann dieser mit internen Strukturen, beispielsweise Hohlräumen, insbesondere Fluidkanälen oder dergleichen, erstellt werden. Fluidkanäle sind typischerweise als Kapillarkanäle, auch Mikrofluidkanäle genannt, ausgelegt und dienen im Betrieb des Werkzeugeinsatzes zum Durchleiten eines Temperierfluides, typischerweise eines Gases wie etwa CO₂. Durch diese Maßnahme kann die Temperierung des Isolators je nach Auslegung der Fluidkanäle und ihrer Fluidbeaufschlagung insgesamt oder auch nur lokal beeinflusst werden.

In einer möglichen Ausführungsform der Erfindung kann durch ein generatives Verfahren ein Grundkörper und ein Isolator erzeugt werden, die einen Materialeigenschaftsgradienten, beispielsweise einen Dichtegradienten aufweisen. Dieser Materialeigenschaftsgradient kann dazu dienen, das thermische Verhalten des Werkzeugeinsatzes anzupassen.

Für die Bereitstellung des Isolators eignet sich aus der bereits vorstehend genannten Gruppe der Legierungen ein metallisches Massivglas der Legierung ZrCu24Al4Nb2.

Hergestellt wird mit einem Urformwerkzeug unter Verwendung zumindest eines solchen Werkzeugeinsatzes ein Produkt in an sich bekannter Weise. Die sich durch den Werkzeugeinsatz ergebenden Vorteile hinsichtlich der Qualität der Abformoberfläche des in dem Urformwerkzeug geformten Gegenstandes, typischerweise eines Kunststoffgegenstandes, sind vorstehend bereits beschrieben. Es ist anzunehmen, dass der Grund für die besondere Oberflächenqualität des urgeformten Gegenstandes die verzögerte Abkühlung durch den unter Beteiligung von metallischem Massivglas oder insgesamt aus diesem Material hergestellten Isolator ist. Bei einer Herstellung eines Kunststofffertigproduktes oder -halbzeuges wird in einem solchen Urformwerkzeug unter Beteiligung zumindest eines erfindungsgemäßen Werkzeugeinsatzes eine Kunststoffschmelze, ausgewählt aus der Gruppe der der Materialien: Duroplast, Elastomer und Thermoplast eingebracht, bei einem Spritzgußwerkzeug eingespritzt. Thermoplaste können aus der Gruppe bestehend aus teilkristallinen Thermoplasten und amorphen Thermoplasten ausgewählt sein. Hierzu eignen sich beispielsweise Polyolefine, Polyacrylate, Polymethacrylate, Polyester, Polyether, Polycarbonate, Polyamide, Polystyrol und andere.

Nach Erhärten der in die Kavität des Urformwerkzeuges in Form gebrachten Masse, beispielsweise der Kunststoffmasse, wird das Werkzeug geöffnet und das in Form gebrachte Fertigprodukt oder Halbzeug aus der Kavität entnommen.

In einer Weiterbildung des Verfahrens ist vorgesehen, dass nach dem vorbeschriebenen In-Form-Bringen der in die Kavität eingebrachten geschmolzenen Masse, beispielsweise der Kunststoffmasse, die Kavität geändert wird, und zwar dergestalt, dass zwischen der in dem ersten Schritt bereitgestellten Oberfläche und der Formoberfläche ein Hohlraum, typischerweise ein Spalt, entsteht, in den in einem zweitem Verfahrensschritt ein weiteres Material eingespritzt und an der durch die Werkzeugeinsätze bereitgestellten Abformoberfläche geformt wird. Dieser Spalt kann nur wenige Mikrometer betragen. Bei dem zusätzlich eingespritzten Material kann es sich beispielsweise um einen Lack handeln. Auch andere Beschichtungen, wie beispielsweise Weichkunststoffbeschichtungen sind möglich.

Nachstehend ist die Erfindung unter Bezugnahme auf die beigefügten Figuren anhand eines Ausführungsbeispiels beschrieben. Es zeigen:
- **Fig. 1:**: Einen schematisierten Querschnitt durch einen Werkzeugeinsatz eines im Übrigen nicht näher dargestellten Kunststoffspritzgusswerkzeuges gemäß einer ersten Ausgestaltung,
- **Fig. 2:**: einen schematisierten Querschnitt durch einen Werkzeugeinsatz eines im Übrigen nicht näher dargestellten Kunststoffspritzgusswerkzeuges gemäß einer weiteren Ausgestaltung und
- **Fig. 3:**: einen schematisierten Querschnitt durch einen Werkzeugeinsatz eines im Übrigen nicht näher dargestellten Kunststoffspritzgusswerkzeuges gemäß noch einer weiteren Ausgestaltung.

Ein Werkzeugeinsatz 1 dient zum teilweisen Einfassen einer Formkavität eines im Übrigen nicht näher dargestellten Kunststoffspritzgusswerkzeuges als beispielhaft beschriebenes Urformwerkzeug. Zum vollständigen Einfassen der Kavität werden ein oder mehrere weitere Werkzeugeinsätze benötigt. Der Werkzeugeinsatz 1 umfasst einen Grundkörper 2, der beispielsweise aus Werkzeugstahl hergestellt ist. Der Grundkörper 2 weist an seiner zur Kavität 3 weisenden Seite eine dreidimensional strukturierte Oberfläche auf. Die dargestellte Strukturierung in den Figuren ist beispielhaft zu verstehen. Die eigentliche Abformoberfläche 4, das heißt diejenige Oberfläche des Werkzeugeinsatzes 1, die von der flüssigen, in die Kavität 3 eingebrachte Kunststoffmasse kontaktiert wird, ist bei dem Werkzeugeinsatz 1 durch die zu der Kavität 3 weisende Seite eines Isolators 5 aus einem metallischen Massivglas gebildet. Das metallische Massivglas bzw. der Isolator 5 ist bei dem dargestellten Ausführungsbeispiel insbesondere aus der Legierung ZrCu24Al4Nb7 hergestellt. Die Dicke des Isolators 5 beträgt bei dem dargestellten Ausführungsbeispiel etwa 20 mm. Die Wärmeleitfähigkeit des Isolators 5 aus metallischem Massivglas ist in diesem Fall um einen Faktor von etwa 8 geringer als die Wärmeleitfähigkeit des Grundkörpers 2. Daher kann die metallische Massivglasschicht als thermischer Isolator 5 wirken, der zu einer Abkühlverzögerung der in die Kavität eingefüllten Kunststoffmasse führen kann. Der Isolator 5 ist durch ein 3D-Laserdruckverfahren auf die zur Kavität 3 weisende Oberfläche 6 des Grundkörpers 2 aufgetragen. Aufgetragen wird der Isolator 5 zunächst mit einer größeren Schichtdicke als der Endschichtdicke von 20 mm. Die eigentliche Abformoberfläche 4 ist in einem nachfolgenden Schritt spanend erstellt worden. Bei der Abformoberfläche 4 handelt es sich um eine bei dem dargestellten Ausführungsbeispiel hochglanzpolierte Oberfläche.

Unterhalb der Abformoberfläche 4 des Werkzeugeinsatzes 1 befinden sich innerhalb des Grundkörpers 2 Hohlräume 7, insbesondere Fluidkanäle zum Temperieren des Werkzeugeinsatzes 1. Diese können einer Erwärmung oder auch einer Abkühlung dienen. Zum Temperieren der Abformoberfläche bzw. der an der Abformoberfläche 4 erhärtenden Masse können auch Hohlräume 7 wie z.B. Mikrofluidkanäle in dem Isolator 5 vorgesehen sein (nicht in der Zeichnung gezeigt). Die Ausbildung derartiger Hohlräume 7 ist bei einer Herstellung des Isolators 5 durch ein generatives Herstellungsverfahren möglich. Derartige Hohlräume 7, insbesondere Mikrofluidkanäle, können beispielsweise in unmittelbarer Nachbarschaft zu der Abformoberfläche 4 unter so genannten Hotspots der Kavität 3 angeordnet sein. Vorteilhaft ist das Einbringen von derartigen Hohlräumen 7, insbesondere von Mikrofluidkanälen in einen solchen, aus metallischem Massivglas hergestellten Isolator 5 vor allem dann, wenn dieser größere Dicken aufweist. Ein solcher Isolator 5 kann beispielsweise auch abformoberflächennah Mikrofluidkanäle und mit einem gewissen Abstand dazu Hohlräume 7 aufweisen, wie diese in den Figuren schematisiert in dem dortigen Grundkörper gezeigt sind.

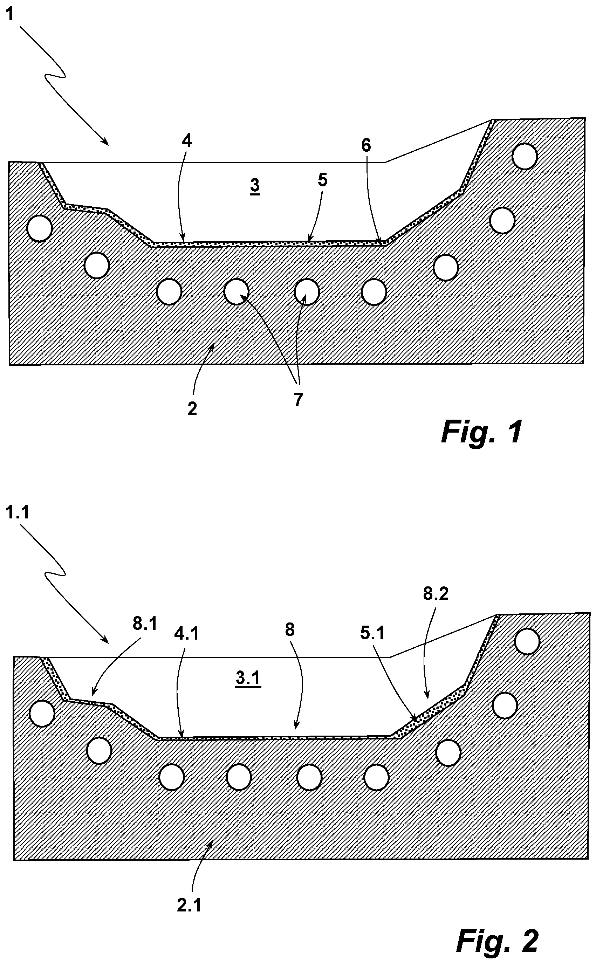

Figur 2 zeigt einen weiteren Werkzeugeinsatz 1.1, der prinzipiell aufgebaut ist wie der vorbeschriebene Werkzeugeinsatz 1. Daher gelten die diesbezüglichen Ausführungen, soweit nachstehend nicht anders beschrieben, auch für den Werkzeugeinsatz 1.1. Gleiche Teile sind mit demselben Bezugszeichen, ergänzt um den Suffix ".1" kenntlich gemacht. Der Werkzeugeinsatz 1.1 unterscheidet sich von dem Werkzeugeinsatz 1 nur dadurch, dass die Dicke des Isolators 5.1 über ihre flächige Erstreckung unterschiedlich ist. Diese ist in den Abschnitten 8, 8.1 dünner als in den anderen Abschnitten dieses Isolators 5.1. In dem Abschnitt 8.2 weist der Isolator 5.1 ihre größte Schichtdicke auf. Die Schichtdicke des Isolators 5 in Form einer metallischen Massivglasschicht ist vorzugsweise für die an der Abformoberfläche 4.1 gewünschte Abkühlverzögerung verantwortlich. Je dicker dieser Isolator 5.1 ist, desto größer ist idealerweise die Abkühlverzögerung bzw. der an diesem Abschnitt der Abformoberfläche 4.1 durch den Isolator 5.1 bereitgestellte Wärmestau. Hergestellt worden ist der Isolator 5.1 ebenso wie dieses zu dem Isolator 5 des Ausführungsbeispiels der Figur 1 beschrieben ist.

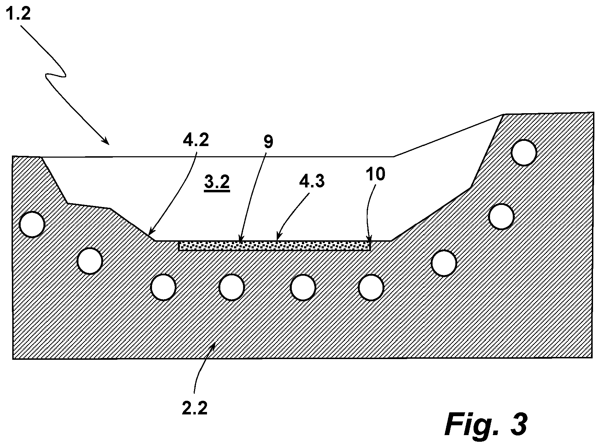

Figur 3 zeigt noch einen weiteren Werkzeugeinsatz 1.2. Gleiche Teile sind ebenfalls mit gleichem Bezugszeichen, ergänzt um den Suffix ".2" kenntlich gemacht. Der Werkzeugeinsatz 1.2 verfügt über eine Abformoberfläche 4.2, die zum Teil von dem Grundkörper 2.2 gebildet wird und zu einem anderen Teil von der diesbezüglichen Oberfläche 4.3 eines als Einsatz ausgelegten Isolators 9 aus metallischem Massivglas. Der Isolator 9 ist separat hergestellt und anschließend in eine vorbereitete Ausnehmung 10, eingebracht in die Abformoberfläche 4.2 des Grundkörpers 2.2, eingesetzt und mit diesem verbunden, beispielsweise durch eine Laserschweißung entlang des Umfanges des Isolators 9.

Alle beschriebenen Ausführungsbeispiele können, wenn gewünscht, mit einer Verschleißschutzschicht, beispielsweise einer Hartchromschicht, beschichtet sein.

### Bezugszeichenliste

- 1, 1.1, 1.2: Werkzeugeinsatz
- 2, 2.1, 2.2: Grundkörper
- 3, 3.1, 3.2: Kavität
- 4, 4.1, 4.2: Abformoberfläche
- 5, 5.1: Isolator
- 6: Oberfläche
- 7: Hohlraum
- 8, 8.1, 8.2: Abschnitt
- 9: Separat hergestellter Isolator
- 10: Ausnehmung

## Patentansprüche

1. Werkzeugeinsatz für ein Urformwerkezug, aufweisend einen thermischen Isolator (5, 5.1, 9) angeordnet auf einem Grundkörper (2, 2.1, 2.2), mit einer von dem geschmolzenen, in Form zu bringenden Werkstoff kontaktierten Abformoberfläche (4, 4.1, 4.2), die zumindest bereichsweise durch einen thermischen Isolator (5, 5.1, 9) von dem Grundkörper (2, 2.1, 2.2) des Werkzeugeinsatzes (1, 1.1, 1.2) beabstandet ist, **dadurch gekennzeichnet, dass** der thermische Isolator (5, 5.1, 9) aus metallischem Massivglas besteht, wobei die Isolatorschichtdicke im Bereich von 0,5 cm - 5 cm liegt.

2. Werkzeugeinsatz gemäß Anspruch 1, **dadurch gekennzeichnet, dass** der Grundkörper dasselbe Material wie der Isolator aufweist oder ein vom Isolator verschiedenes Material, insbesondere einen Werkzeugstahl.

3. Werkzeugeinsatz nach einem der Ansprüche 1 oder 2, **dadurch gekennzeichnet, dass** die Abformoberfläche (4, 4.1, 4.2) des Werkzeugeinsatzes oder zumindest ein Bereich der Abformoberfläche durch den Isolator (5, 5.1, 9) selbst gebildet ist.

4. Werkzeugeinsatz nach einem der Ansprüche 1 bis 3, **dadurch gekennzeichnet, dass** zumindest im Bereich des Isolators (5, 5.1, 9) eine Verschleißschutzschicht auf dem Isolator (5, 5.1, 9) angeordnet ist.

5. Werkzeugeinsatz nach einem der Ansprüche 1 bis 4, **dadurch gekennzeichnet, dass** die Dicke des Isolators (5, 5.1, 9) über seine flächige Erstreckung zumindest weitestgehend konstant ist.

6. Werkzeugeinsatz nach einem der Ansprüche 1 bis 4, **dadurch gekennzeichnet, dass** die Dicke des Isolators (5, 5.1, 9) über seine flächige Erstreckung zum Bereitstellen von unterschiedlich rasch temperierten Abformoberflächenbereichen unterschiedlich ist,

7. Werkzeugeinsatz nach einem der Ansprüche 1 bis 6, **dadurch gekennzeichnet, dass** innerhalb des Isolators (5, 5.1, 9) und/oder des Grundkörpers Hohlräume 7 vorgesehen sind, wobei die Hohlräume 7 insbesondere Fluidkanäle zum Durchleiten eines Temperierfluides, insbesondere eines Temperiergases sind.

8. Werkzeugeinsatz nach einem der Ansprüche 1 bis 7, **dadurch gekennzeichnet, dass** der Isolator (5, 5.1) stoffschlüssig, insbesondere durch ein generatives Herstellungsverfahren, auf dem Material des Grundkörpers (1, 1.1) oder einen darin eingebrachten Einsatz aufgebracht ist.

9. Werkzeugeinsatz nach einem der Ansprüche 1 bis 8, **dadurch gekennzeichnet, dass** das metallische Massivglas eine Legierung ist, die auf einem Element basiert, das ausgewählt ist aus der Gruppe, bestehend aus Co, Fe, Ti, Zr, Cu, Au, Pt und Mg.

10. Werkzeugeinsatz nach Anspruch 9, **dadurch gekennzeichnet, dass** das metallische Massivglas eine Legierung ist, die Zr und Cu enthält.

11. Werkzeugeinsatz nach einem der Ansprüche 1 bis 10, **dadurch gekennzeichnet, dass** die vom Grundkörper (2, 2.1, 2.2) wegweisende Oberfläche des Isolators (5, 5.1, 9) nach der Herstellung spanend bearbeitet ist, insbesondere mittels Polieren, Schleifen, Erodieren oder Fräsen.

12. Werkzeugeinsatz nach einem der Ansprüche 1 bis 11, **dadurch gekennzeichnet, dass** der Werkzeugeinsatz (1, 1.1, 1.2) ein solcher für ein Kunststoffspritzgusswerkzeug ist.

13. Urformwerkzeug, insbesondere Kunststoffurformwerkzeug, mit zumindest einer durch zumindest zwei Werkzeugeinsätze eingefassten Kavität (3, 3.1, 3.2), **dadurch gekennzeichnet, dass** zumindest einer dieser Werkzeugeinsätze ein Werkzeugeinsatz (1, 1.1, 1.2) nach einem der Ansprüche 1 bis 12 ist.

14. Verfahren zur Herstellung eines Kunststoffteils durch Urformen, insbesondere Spritz- oder Pressgießen, unter Verwendung eines Werkzeugeinsatzes (1, 1.1, 1.2) gemäß einem der Ansprüche 1 bis 12 oder unter Verwendung eines Urformwerkzeuges nach Anspruch 13, **dadurch gekennzeichnet, dass** in die Kavität (3, 3.1, 3.2) eine geschmolzene Kunststoffmasse eingebracht wird, welche ausgewählt ist aus der Gruppe bestehend aus Duroplasten, Elastomeren und Thermoplasten.

15. Verfahren nach Anspruch 14, **dadurch gekennzeichnet, dass** nach dem Urformen des Formteils eine weitere Kavität zwischen dem Formteil und dem Werkzeugeinsatz 1 erzeugt wird und in diese weitere Kavität ein weiteres Material eingespritzt wird.

## Claims

1. A tool insert for a primary shaping tool, comprising a thermal insulator (5, 5.1, 9) disposed on a main part (2, 2.1, 2.2) having a molding surface (4, 4.1, 4.2) contacted by the molten material to be shaped, said surface being at least partly spaced from the main part (2, 2.1, 2.2) of the tool insert (1, 1.1, 1.2) by a thermal insulator (5, 5.1, 9), **characterized in that** the thermal insulator (5, 5.1, 9) consists of bulk metallic glass, the insulator layer thickness being in the range of 0.5 cm - 5 cm.

2. The tool insert according to claim 1, **characterized in that** the main part comprises the same material as the insulator or a material different from the insulator, in particular a tool steel.

3. The tool insert according to either claim 1 or claim 2, **characterized in that** the molding surface (4, 4.1, 4.2) of the tool insert or at least a region of the molding surface is formed by the insulator (5, 5.1, 9) itself.

4. The tool insert according to any of claims 1 to 3, **characterized in that,** at least in the region of the insulator (5, 5.1, 9), an anti-wear layer is disposed on the insulator (5, 5.1, 9).

5. The tool insert according to any of claims 1 to 4, **characterized in that** the thickness of the insulator (5, 5.1, 9) is at least largely constant over its planar extension.

6. The tool insert according to any of claims 1 to 4, **characterized in that** the thickness of the insulator (5, 5.1, 9) varies over its planar extension to provide molding surface regions which are temperature-controlled at different rates.

7. The tool insert according to any of claims 1 to 6, **characterized in that** cavities 7 are provided within the insulator (5, 5.1, 9) and/or the main part, the cavities 7 in particular being fluid channels for conveying a temperature-control fluid, in particular a temperature-control gas.

8. The tool insert according to any of claims 1 to 7, **characterized in that** the insulator (5, 5.1) is integrally applied, in particular by a rapid manufacturing method, to the material of the main part (1, 1.1) or to an insert introduced therein.

9. The tool insert according to any of claims 1 to 8, **characterized in that** the bulk metallic glass is an alloy which is based on an element selected from the group consisting of Co, Fe, Ti, Zr, Cu, Au, Pt and Mg.

10. The tool insert according to claim 9, **characterized in that** the bulk metallic glass is an alloy containing Zr and Cu.

11. The tool insert according to any of claims 1 to 10, **characterized in that** the surface of the insulator (5, 5.1, 9) facing away from the main part (2, 2.1, 2.2) is machined after production, in particular by means of polishing, grinding, eroding or milling.

12. The tool insert according to any of claims 1 to 11, **characterized in that** the tool insert (1, 1.1, 1.2) is a tool insert for a plastics injection molding tool.

13. A primary shaping tool, in particular a plastics primary shaping tool, comprising at least one cavity (3, 3.1, 3.2) enclosed by at least two tool inserts, **characterized in that** at least one of said tool inserts is a tool insert (1, 1.1, 1.2) according to any of claims 1 to 12.

14. A method for producing a plastics part by primary shaping, in particular injection or compression molding, using a tool insert (1, 1.1, 1.2) according to any of claims 1 to 12 or using a primary shaping tool according to claim 13, **characterized in that** a molten plastics mass, which is selected from the group consisting of thermosets, elastomers and thermoplastics, is introduced into the cavity (3, 3.1, 3.2).

15. The method according to claim 14, **characterized in that,** after the shaped part has been primary-shaped, a further cavity is created between the shaped part and the tool insert 1, and a further material is injected into this further cavity.

## Revendications

1. Insert d'outil pour un outil de moulage primaire, présentant un isolateur (5, 5.1, 9) thermique disposé sur un corps de base (2, 2.1, 2.2), comportant une surface de moulage (4, 4.1, 4.2) en contact avec le matériau fondu à mettre en forme, laquelle surface de moulage est séparée du corps de base (2, 2.1, 2.2) de l'insert d'outil (1, 1.1, 1.2), au moins dans certaines zones, par un isolateur (5, 5.1, 9) thermique, **caractérisé en ce que** l'isolateur (5, 5.1, 9) thermique est constitué de verre massif métallique, dans lequel l'épaisseur de couche d'isolateur est comprise dans la plage allant de 0,5 cm à 5 cm.

2. Insert d'outil selon la revendication 1, **caractérisé en ce que** le corps de base présente le même matériau que l'isolateur ou un matériau différent de celui de l'isolateur, en particulier un acier à outils.

3. Insert d'outil selon l'une des revendications 1 ou 2, **caractérisé en ce que** la surface de moulage (4, 4.1, 4.2) de l'insert d'outil ou au moins une zone de la surface de moulage est formée par l'isolateur (5, 5.1, 9) lui-même.

4. Insert d'outil selon l'une des revendications 1 à 3, **caractérisé en ce que,** au moins dans la zone de l'isolateur (5, 5.1, 9), une couche de protection contre l'usure est disposée sur l'isolateur (5, 5.1, 9).

5. Insert d'outil selon l'une des revendications 1 à 4, **caractérisé en ce que** l'épaisseur de l'isolateur (5, 5.1, 9) est au moins largement constante sur son extension en surface.

6. Insert d'outil selon l'une des revendications 1 à 4, **caractérisé en ce que** l'épaisseur de l'isolateur (5, 5.1, 9) est différente sur son extension en surface pour la fourniture de zones de surface de moulage tempérées à différentes vitesses.

7. Insert d'outil selon l'une des revendications 1 à 6, **caractérisé en ce que** des espaces creux (7) sont prévus à l'intérieur de l'isolateur (5, 5.1, 9) et/ou du corps de base, dans lequel les espaces creux (7) sont en particulier des canaux pour fluide pour le passage d'un fluide de régulation de température, en particulier d'un gaz de régulation de température.

8. Insert d'outil selon l'une des revendications 1 à 7, **caractérisé en ce que** l'isolateur (5, 5.1) est appliqué par liaison de matière, en particulier par un procédé de fabrication génératif, sur le matériau du corps de base (1, 1.1) ou sur un insert qui y est introduit.

9. Insert d'outil selon l'une des revendications 1 à 8, **caractérisé en ce que** le verre massif métallique est un alliage à base d'un élément choisi dans le groupe constitué de Co, Fe, Ti, Zr, Cu, Au, Pt et Mg.

10. Insert d'outil selon la revendication 9, **caractérisé en ce que** le verre massif métallique est un alliage contenant Zr et Cu.

11. Insert d'outil selon l'une des revendications 1 à 10, **caractérisé en ce que** la surface de l'isolateur (5, 5.1, 9) s'éloignant du corps de base (2, 2.1, 2.2) est usinée par enlèvement de matière après la fabrication, en particulier au moyen d'un polissage, rectification, érosion ou fraisage.

12. Insert d'outil selon l'une des revendications 1 à 11, **caractérisé en ce que** l'insert d'outil (1, 1.1, 1.2) est un insert d'outil pour un outil de moulage par injection de matière plastique.

13. Outil de moulage primaire, en particulier outil de moulage primaire de matière plastique, comportant au moins une cavité (3, 3.1, 3.2) bordée par au moins deux inserts d'outil, **caractérisé en ce qu'**au moins l'un desdits inserts d'outil est un insert d'outil (1, 1.1, 1.2) selon l'une des revendications 1 à 12.

14. Procédé de fabrication d'une pièce en matière plastique par moulage primaire, en particulier par injection ou par moulage sous pression, à l'aide d'un insert d'outil (1, 1.1, 1.2) selon l'une des revendications 1 à 12 ou à l'aide d'un outil de moulage primaire selon la revendication 13, **caractérisé en ce qu'**une masse de matière plastique fondue est introduite dans la cavité (3, 3.1, 3.2), laquelle masse de matière plastique est choisie dans le groupe constitué de résines thermodurcissables, élastomères et thermoplastiques.

15. Procédé selon la revendication 14, **caractérisé en ce qu'**après le moulage primaire de la pièce moulée, une autre cavité est produite entre la pièce moulée et l'insert d'outil (1) et un autre matériau est injecté dans ladite autre cavité.
